# EUROPÄISCHE PATENTSCHRIFT

(11) **EP 2 448 742 B1**
(45) Veröffentlichungstag und Bekanntmachung des Hinweises auf die Patenterteilung: **31.01.2018**
(21) Anmeldenummer: 10725488.0
(22) Anmeldetag: 29.06.2010
(51) Int. Cl.: B29C 47/88, B29C 47/86, B29C 47/92

(54) **VORRICHTUNG UND VERFAHREN ZUM KÜHLEN VON KUNSTSTOFFPROFILEN**
DEVICE AND METHOD FOR COOLING PLASTIC PROFILES
DISPOSITIF ET PROCÉDÉ POUR REFROIDIR DES PROFILÉS EN MATIÈRE PLASTIQUE

(30) Priorität: 02.07.2009 DE 102009027437
(43) Veröffentlichungstag der Anmeldung: 09.05.2012
(73) Patentinhaber: battenfeld-cincinnati Germany GmbH, 32547 Bad Oeynhausen (DE)
(72) Erfinder: DOHMANN, Heinrich, 37671 Höxter (DE); GESPER, Thomas, 33334 Gütersloh (DE)
(86) Internationale Anmeldenummer: PCT/EP2010/059189
(87) Internationale Veröffentlichungsnummer: WO 2011/000822

(56) Entgegenhaltungen:
- DE-A1-102005 031 747
- US-A- 3 095 608
- US-A- 3 605 787
- US-A- 3 609 809
- US-A- 3 724 976
- US-A- 4 140 460
- US-A- 4 508 138
- US-A1- 2002 150 648

## Beschreibung

Die Erfindung betrifft eine Extrusionslinie zur Herstellung von Kunststoffprofilen, vorzugsweise Kunststoffrohren, umfassend mindestens einen Extruder, ein Werkzeug, eine Kalibrierstation sowie weitere Nach-folgeeinrichtungen gemäß dem Oberbegriff des Anspruchs 1 und veröffentlicht in US 3 724 976 A. Weiterhin betrifft die Erfindung ein Verfahren zum Erhöhen der Kühlleistung einer Extrusionslinie zum Extrudieren eines Kunststoffprofiles, insbesondere eines Kunststoffrohres, das die Schritte umfasst: a) Aufschmelzen von Kunststoff in einem Extruder, b) Formen eines Kunststoffstranges und Zuführen des Kunststoffstranges zu einem Werkzeug, c) Formen eines Kunststoffprofiles mittels des Werkzeuges, d) Kalibrieren und Aushärten mittels Kühlung des Profils in einer Kalibrierung.
Zur Herstellung von Rohren wird Kunststoff in einem Extruder aufgeschmolzen und durch ein entsprechendes Werkzeug gepresst. In einer anschließenden Kalibrierung wird der so erzeugte Außendurchmesser eingefroren und in Wassersprühbädern oder -vollbädern dem Kunststoff über die Außenoberfläche die Wärme entzogen. Dabei muss die gesamte Wärme durch die Kunststoffwand nach außen geleitet werden, wo sie dann vom Kühlwasser abgeleitet wird. Mit zunehmender Rohrwanddicke wird die Kühllänge überproportional länger, da der Kunststoff ein schlechter Wärmeleiter ist. Hinzu kommt, dass die Temperatur im Inneren des Rohres lange auf einem hohen Niveau bleibt und der Kunststoff ausreichend Zeit hat, aufgrund der Schwerkraft nach unten abzurinnen.

Die Folge ist, dass die Rohrwanddicke im oberen Bereich immer kleiner als im unteren Bereich ist.

Dieser Prozess hat mit zunehmender Rohrwanddicke also zwei Nachteile. Die Kühllänge wird überproportional länger und der Kunststoff rinnt an der Innenwand ab, die Folge ist eine ungleiche Wanddickenverteilung. Um diese Nachteile zu verringern sind mehrere Systeme einer Rohrinnenkühlung wie aus der EP 795 389 bekannt. Diese Systeme sind in ihrer Wirkungsweise jedoch sehr eingeschränkt. Da das Rohr sowohl außen als auch innen gekühlt wird, wird sowohl die Außenkontur als auch die Innenkontur eingefroren. Wenn nun die Schmelze in der Mitte der Rohrwand durch Wärmeableitung nach außen und innen erstarrt, entstehen durch die starke Volumenreduzierung beim Übergang vom schmelzeförmigen in den festen Zustand Lunker. Diese Gefahr wird mit dicker werdenden Rohrwandstärken größer.

Aus der JP 56-005 750 A ist eine Vorrichtung zur Extrusion von Kunststoffprofilen bekannt, der plastifizierte Kunststoffmasse zuführbar ist und die mehrere Ringkanäle aufweist, die zu einem gemeinsamen Schmelzekanal vereinigt werden. Um diese Ringkanäle sind Kühlkanäle angeordnet.

Aus der DE 10 2005 031 747 A1 sind ein Verfahren zur Innenkühlung hohler Kunststoffprofile und ein Extruder zur Herstellung hohler Kunststoffprofile bekannt. Hierbei wird die Innenkühlung dadurch erreicht, dass in den Innenraum des Hohlprofiles ein Kühlgas geleitet wird, wobei das Kühlgas in einem Ranqueschen Wirbelrohr erzeugt wird.

Die DE 10 2007 O50 291 offenbart ein Werkzeug zur zusätzlichen Kühlung der Schmelze in dem der Schmelzestrang in mehrere Teilstränge aufgeteilt wird.

Obige Lösungen sind verfahrenstechnisch z.B. durch die Aufteilung in mehrere Fließkanäle (die alle gekühlt werden können) schwer zu handhaben und umfassen sehr hohe Herstellkosten sowie ein deutlich höheren Aufwand bei der Wartung und Reinigung der Fließkanäle. Des Weiteren ist das Risiko, dass sich die Schmelze mit dem Kühlmedium vermischen kann sehr hoch, da beide Strömungsräume im Extrusionsbetrieb mit sehr hohen Innendrücken betrieben werden müssen und diese nur durch eine einfache Stahloberflächendichtung voneinander getrennt werden.
**Aufgabe** der vorliegenden Erfindung ist es, eine Extrusionslinie mit einem Werkzeug sowie ein Verfahren anzubieten, bei dem eine möglichst einfache und effiziente Werkzeugtemperierung realisierbar ist. Wenn möglich soll die Kühlluft zur Rohrinnenkühlung sowie zur Kühlung des Werkzeuges genutzt werden können.
Diese Aufgabe wird mittels einer Extruderlinie gemäß dem Oberbegriff des Anspruches 1 dadurch **gelöst,** dass ***das Werkzeug Durchführkanäle umfasst*** und das Werkzeug eine Innenkühlung aufweist deren Strömungsverteilung beeinflussbar ist, wobei im Inneren des Werkzeuges mindestens eine axial verschiebbare Abluftdurchführung als Abzweigung für ein Kühlmedium angeordnet ist, mittels der die Strömungsverteilung durchführbar ist, ***wobei in der axial verschiebbaren Abluftdurchführung Fluidöffnungen angeordnet sind, die in Verbindung mit der Abluftdurchführung einen Bypass bilden.***

Durch diese Abzweigung, die ähnlich eines Bypasses wirkt, wird erreicht, dass das Kühlmedium gezielt beeinflusst werden kann und somit die Menge die durch den Dorn geführt wird gesteuert wird.

Das Werkzeug weist sinnvoller Weise mehrere Kühlkanäle axial oder radial auf, die individuell zur Kühlung genutzt werden können. So kann insbesondere bei dickwandigen Rohren dem Abdriften der Schmelze (bedingt durch die Schwerkraft) entgegen gewirkt werden. Durch diese Maßnahme wird der Schub der Schmelze beeinflusst.

So kann beispielsweise im oberen Bereich stärker gekühlt werden. Betrachtet man schematisch einen Schnitt durch das Werkzeug, senkrecht zur Extrusionsachse, so befinden sich am Umfang verteilt mehrere Kühlbohrungen A. Zwischen 10:30 und 1:30 Uhr (1/4 vom Umfang und exakt oben) sind zusätzliche Kühlbohrungen B vorgesehen die mittels Klappen geöffnet oder geschlossen werden können. Somit kann im Bedarfsfall der obere Bereich, durch Öffnen der Bohrungen B, stärker gekühlt werden. Selbstverständlich kann dies auch durch weitere Bohrungen C verstärkt werden, wodurch gezielt eine Schubbeeinflussung (dieses wiederum hat Einfluss auf das Zentrieren am Werkzeug) stattfindet. Somit kann man indirekt von einer thermischen Zentrierung sprechen.

Die Bohrungen müssen nicht zwingend mittels Klappen verschlossen werden, denkbar ist auch ein Ventil oder ein aufblasbarer Balg. Die gesamte Fluidmenge und damit der Fluidstrom kann über die Abzweigung (Abluftdurchführung) umgeleitet werden, so dass sie nicht durch die oben beschrieben Bohrungen geleitet wird.

Vorteilhafterweise ist die Abzweigung oder der Bypass als Rohr ausgeführt und ist entlang der Extrusionsachse verschiebbar und/oder drehbar.

In einer weiteren Fortbildung ist vorgesehen den Bypass als einer Umschalteinrichtung zu versehen und somit es zu ermöglichen, den Bypass gezielt hinzu oder abzuschalten bzw. nur teilweise zuzuschalten. Die Klappen oder Bohrungen, die bis zur Deckungsgleichheit verschoben werden können, bilden somit in Gänze die Umschalteinrichtung.

Ergänzend ist eine gezielte Anordnung von Kühlrippen an den mit der Kühlluft zu durchströmenden Räumen vorgesehen. Es wird dadurch die zu kühlende Oberfläche vergrößert und verbessert den gewünschten Kühleffekt.

Auch die äußeren Werkzeugoberflächen können über entsprechende Bypässe des Hauptkühlluftstromes, außerhalb des Werkzeuges, mit einem zentralen Ventilator gekühlt werden.

Weitere sinnvolle Fortbildungen sind in den Unteransprüchen wiedergegeben.

Bezüglich des Verfahrens wird die Aufgabe in Verbindung mit dem Oberbegriff des Anspruches 5 dadurch **gelöst,** dass Fluid durch Durchführkanäle und das Werkzeug geführt wird, wobei mittels eines Bypasses die Fluidströmung im Werkzeug gesteuert wird, indem Fluidöffnungen im Bypass von 0% bis 100% geöffnet bzw. verschlossen werden, ***wobei der Bypass über die Fluidöffnungen in Verbindung mit einer Abluftdurchführung gebildet wird.***

In einer weiteren Fortbildung ist vorgesehen, dass die Temperatur des Werkzeuges über die Maschinensteuerung geregelt wird, indem das Kühlmedium mehr oder weniger durch den Bypass geleitet wird. D.h.: Die inneren (ist aber auch bei der äußeren Werkzeugfließoberflächen denkbar) Werkzeugfließoberflächen können durch die Kombination von elektrischen Heizbänder und gezielter Luftkühlung auf die für den jeweiligen Prozess erforderlichen Temperaturen eingeregelt werden.

Vorteilhafterweise ist dann der Bypass bzw. die Abluftdurchführung thermisch isoliert. Zusätzlich können dies auch die Durchführkanäle sein.

Das vorgeschlagene Verfahren und die erfindungsgemäße Vorrichtung eignen sich besonders zur Herstellung dickwandiger Rohre.

In den Zeichnungen sind zwei Ausführungsbeispiele der Erfindung schematisch dargestellt, es zeigt
- Fig. 1: eine Extrusionslinie,
- Fig. 2: eine perspektivische Ansicht des Werkzeuges
- Fig. 3: einen Schnitt durch das Werkzeug und
- Fig. 4: eine weitere Ansicht mit einem Schnitt durch das Werkzeug

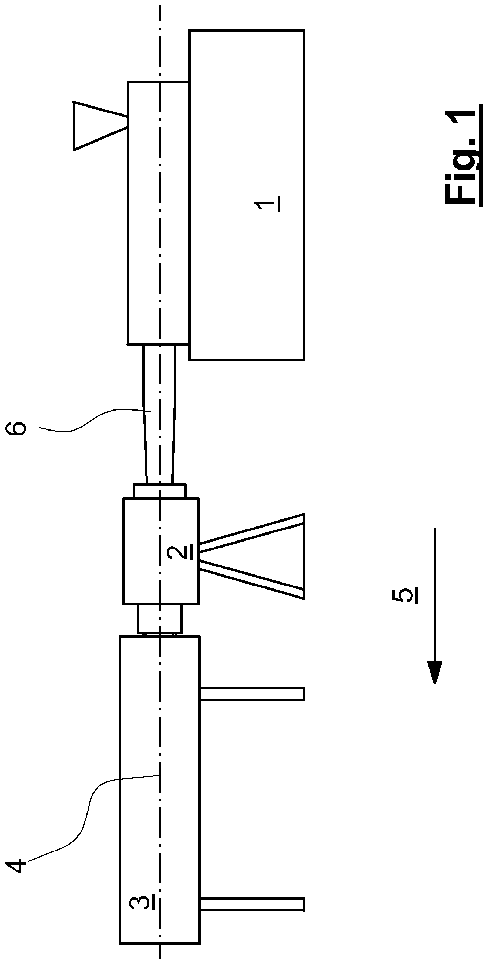

In Figur 1 ist schematisch eine Extrusionslinie dargestellt, wobei der Extruder 1 seitlich am Extrusionswerkzeug 2 angeordnet ist. In Extrusionsrichtung 5 betrachtet schließt sich ans Werkzeug 2 die Kalibrierung 3 an. Weitere Nachfolgeeinrichtung, wie ein Abzug und eine Trennvorrichtung, wobei diese spanlos sein sollte, schließt sich in der Regel an. Denn die zur Kühlung eingesetzte Luft wird entgegen der Extrusionsrichtung durch das extrudierte Rohr geführt, weiter durchs Werkzeug hindurch und dann vorm Extruder abgeführt. Ist die Trennvorrichtung z.B. eine herkömmliche Säge, würden die Späne mit angesaugt oder mit durch das Rohr geblasen werden. In der beispielhaft dargestellten Extrusionslinie wird ein Kunststoffrohr 6 gefertigt.

Die Kalibrierung 3 umfasst einen Vakuumtank mit eingebauter Kalibrierhülse. An die Kalibrierung können sich auch noch weitere Kühlbäder anschließen.

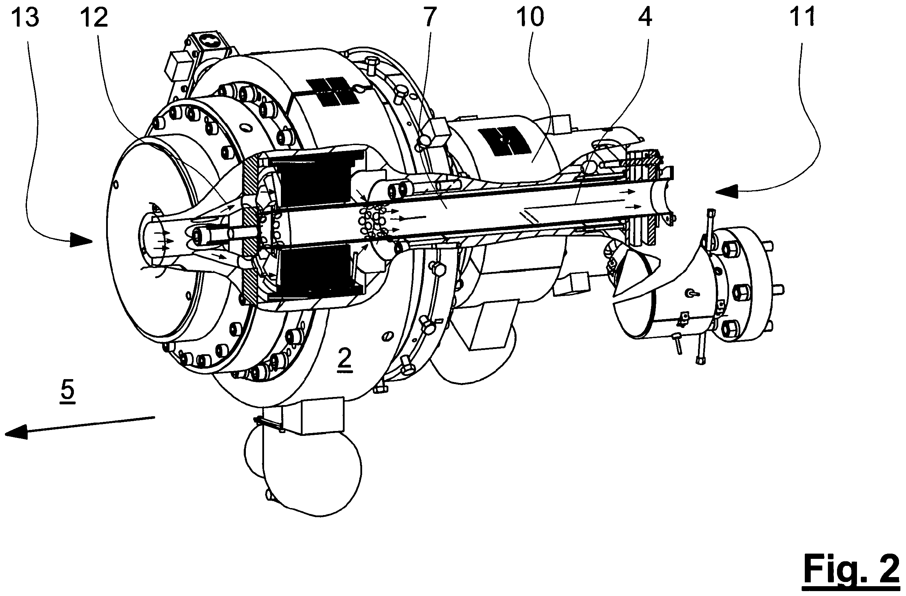

In Figur 2 ist das erfindungsgemäße Werkzeug 2 in einer perspektivischen Darstellung wiedergegeben, wobei der erfindungswesentliche Teil um die Extrusionsachse 4 ausgebrochen wurde. Im Inneren des Werkzeuges 2 ist in diesem Ausführungsbeispiel eine Abluftdurchführung 7 angeordnet. Die in der Ausbrechung nicht zu sehende Schmelze, wird über einen Wendeverteiler 10 aufgeteilt und den ebenfalls nicht zu sehenden Schmelzekanälen zugeführt, die im Werkzeug 2 das zu extrudierende Produkt vorformen. Entgegen der Extrusionsrichtung 5 wird ein Fluid 16 (durch die Pfeile symbolisiert) durch das Werkzeug 2 geführt. Der Fluidstrom wird in mehrere Durchführkanäle 12 aufgeteilt und zur Kühlung des Werkzeuges 2 und damit zur Vorkühlung der Schmelze in den Schmelzekanälen entgegen der Extrusionsrichtung durch das Werkzeug 2 geführt.

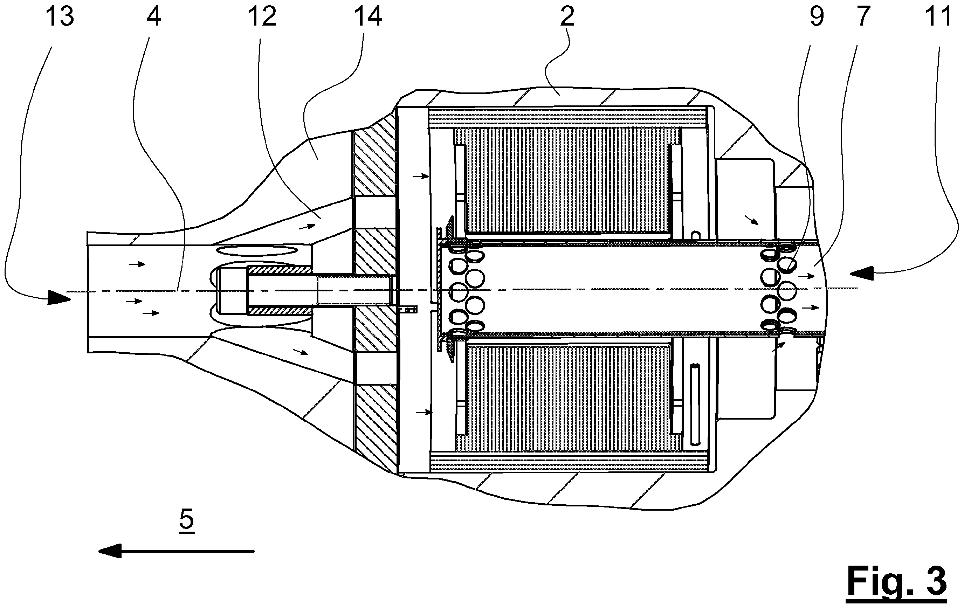

In Figur 3 ist der ausgebrochene Teil aus Figur 2 des erfindungsgemäßen Werkzeuges 2 einzeln dargestellt, wobei ein Schnitt durch das Werkzeug 2 entlang der Extrusionsachse 4 gezeigt ist. Die inneren Durchführkanäle 12 teilen sich gleichmäßig um den Dorn 14 des Werkzeuges 2 auf. Der entgegen der Extrusionsrichtung 5 laufende Fluidstrom (durch kleine Pfeile verdeutlicht) gelangt in die Durchführkanäle 12 und wird durch das Werkzeug 2 geleitet. Nachdem das Fluid das Werkzeug 2 durchlaufen hat, gelangt es durch die Fluidöffnungen 9 auf der extrudernahen Seite 11 in die Abluftdurchführung 7 und wird nach außen abgeführt.

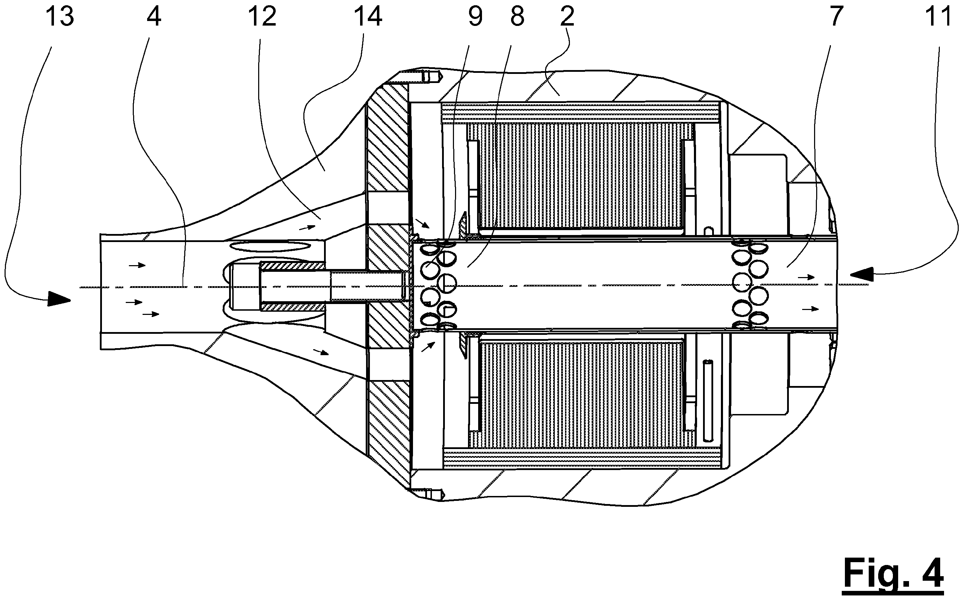

Figur 4 entspricht im Wesentlichen der Figur 3 und unterscheidet sich lediglich dadurch, dass die Abluftdurchführung 7 in Extrusionsrichtung 5 verschoben ist. Durch diese axiale Verschiebung werden die Fluidöffnungen 9 in der Abluftdurchführung 7 auf der extruderfernen Seite 13 freigelegt. Nun kann der entgegen der Extrusionsrichtung 5 laufende Fluidstrom (auch wieder durch kleine Pfeile verdeutlicht) von den Durchführkanälen 12 über die Fluidöffnungen 9, ohne durch das Werkzeug 2 laufen zu müssen, direkt in die Abluftdurchführung 7 gelangen und nach außen abgeführt werden. Die mittig im Dorn 14 eingesetzte Abluftdurchführung 7 bildet somit einen Bypass oder Abzweigung im Werkzeug 2.

Durch axiales Verschieben dieser Abluftdurchführungen 7 können die radialen Fluidöffnungen 9 individuell auf der extrudernahen oder extruderfernen Seite geöffnet werden. Bei Bedarf kann auch eine Zwischenstellung gewählt werden, um so den Fluidstrom zu beeinflussen.

Das Verschieben kann manuell von außen, und/oder über die Maschinensteuern elektrisch oder pneumatisch bzw. hydraulisch gesteuert oder geregelt werden.

Das auf diese Weise erwärmte Kühlmedium kann mit einem Energieträger (z. B. Luft) die abgeführte Energie aus Rohrinnenkühlung und Werkzeugkühlung ableiten oder z.B. zur Trocknung vom Granulat wieder genutzt werden.

Je nach dem Grad der axialen Verschiebung werden die Fluidöffnungen 9 mehr oder weniger überlappt und somit im Öffnungsgrad variabel gehalten.

Die hier gezeigte Lösung mit den Fluidöffnungen 9 ist auch in alternativen Ausführungen machbar. So wird beispielsweise an Klappen oder Ventile gedacht, die geöffnet oder geschlossen werden, um den Fluidstrom zu beeinflussen. Es ist auch nicht zwingend ein verschiebbares Rohr erforderlich, es kann euch ein poröses Material eingebracht werden, dessen Durchlässigkeit durch die Temperatur beeinflusst wird.

Mit dem vorgeschlagenen Verfahren und der vorgeschlagenen Vorrichtung ist es damit vereinfacht möglich, gleichmäßig oder wie oben beschrieben, gerade gezielt ungleichmäßig Wärme über die gesamte Wanddicke des Rohres bereits innerhalb des Werkzeuges abzuführen.

### Bezugszeichenliste:

- 1: Extruder
- 2: Werkzeug
- 3: Kalibrierung
- 4: Extrusionsachse
- 5: Extrusionsrichtung
- 6: Kunststoffrohr
- 7: Abluftdurchführung
- 8: Bypass in 2
- 9: Fluidöffnung in 7
- 10: Wendelverteiler
- 11: extrudernahe Seite
- 12: Durchführkanal
- 13: extruderferne Seite
- 14: Dorn

## Patentansprüche

1. Extrusionslinie zur Herstellung von Kunststoffprofilen, vorzugsweise Kunststoffrohren, umfassend mindestens
einen Extruder (1),
ein Werkzeug (2),
eine Kalibrierung (3)
sowie weitere Nachfolgeeinrichtungen,
**dadurch gekennzeichnet, dass**
***das Werkzeug (2) Durchführkanäle (12) umfasst,*** die gleichmäßig um den Dorn (14) des Werkzeuges (2) aufgeteilt sind ***und***
das Werkzeug (2) eine Innenkühlung, entgegen der Extrusionsrichtung aufweist deren Strömungsverteilung beeinflussbar ist,
wobei im Inneren des Werkzeuges (2) mindestens eine axial verschiebbare Abluftdurchführung (7) als Abzweigung für ein Kühlmedium angeordnet ist, mittels der die Strömungsverteilung durchführbar ist,
***wobei in der axial verschiebbaren Abluftdurchführung (7) Fluidöffnungen (9)*** auf der extrudernahen (11) oder extruderfernen Seite (13) ***angeordnet sind, die in Verbindung mit der Abluftdurchführung (7) einen Bypass (8) bilden.***

2. Vorrichtung nach Anspruch 1, **dadurch gekennzeichnet, dass** die Abzweigung als Umschalteinrichtung vorgesehen ist.

3. Vorrichtung nach Anspruch 2, **dadurch gekennzeichnet, dass** die Abzweigung als Abluftdurchführung (7) ausgeführt ist und dass die Abluftdurchführung (7) entlang der Extrusionsachse (4) verschiebbar oder um diese verdrehbar ist.

4. Vorrichtung nach einem der Ansprüche 1, 2 oder 3, **dadurch gekennzeichnet, dass** eine gezielte Anordnung von Kühlrippen an den mit dem Kühlmedium zu durchströmenden Räumen vorgesehen ist und als Kühlmedium ein gasförmiges Fluid eingesetzt wird.

5. Verfahren zur Erhöhung der Kühlleistung einer Extrusionslinie zum Extrudieren eines Kunststoffprofils, insbesondere eines Kunststoffrohres, das die Schritte umfasst,
a) Aufschmelzen von Kunststoff in einem Extruder (1),
b) Formen eines Kunststoffstranges und Zuführen des Kunststoffstranges zu einem Werkzeug (2),
c) Formen eines Kunststoffprofiles mittels des Werkzeuges (2) und
Kalibrieren und Aushärten mittels Kühlung des Profils in einer Kalibrierung (3),
wobei die Temperatur des Kunststoffstranges im Werkzeug (2) vor Austritt aus dem Werkzeug (2) mittels eines durch das Werkzeug (2) entgegen der Extrusionsrichtung geleiteten Fluids reduziert wird,
**dadurch gekennzeichnet, dass**
das Fluid durch Durchführkanäle (12), die gleichmäßig um den Dorn (4) des Werkzeuges (2) aufgeteilt sind, und das Werkzeug (2) geführt wird,
wobei mittels eines Bypasses (8) die Fluidströmung im Werkzeug (2) gesteuert wird,
indem Fluidöffnungen (9) im Bypass (8) von 0% bis 100% geöffnet bzw. verschlossen werden,
***wobei der Bypass (8)*** so gebildet ist, dass durch axiales Verschieben einer Abluftdurchführung (7) die radialen Fluidöffnungen (9) individuell auf der extrudernahen oder extruderfernen Seite geöffnet werden können.

6. Verfahren nach Anspruch 5, **dadurch gekennzeichnet, dass** im Extrusionsbetrieb die Bypassluft von 0% bis 100% durch eine oder mehrere Umschaltvorrichtungen stufenlos dosiert wird.

7. Verfahren nach Anspruch 5 oder 6, **dadurch gekennzeichnet, dass** die Temperatur des Werkzeuges über die Maschinensteuerung geregelt wird, indem das Kühlmedium mehr oder weniger durch den Bypass (8) geleitet wird oder Bereiche über elektrische Heizelemente geheizt werden.

## Claims

1. Extrusion line for producing plastic profiles, preferably plastic pipes, comprising at least
an extruder (1),
a tool (2),
a calibration device (3),
as well as further downstream equipment (4, 5),
**characterized in that**
the tool (2) comprises guide channels (12) located evenly around the mandrel of the tool (2)
**and that**
the tool (2) features an interior cooling counter to the extrusion direction, the flow distribution of which is adjustable,
at least one axially movable extract air duct (7) being arranged inside the tool (2) as a junction for a cooling medium by means of which junction the flow distribution can be carried out,
**fluid passages (9) being arranged in the axially movable extract air duct (7)** at the side closest to (11) or opposite (12) the extruder **the passages forming a bypass (8) in combination with the extract air duct (7).**

2. Apparatus according to claim 1, **characterized in that** the junction is provided as a switching device.

3. Apparatus according to claim 2, **characterized in that** the junction is designed as extract air duct (7), and that the extract air duct (7) is movable along the extrusion axis (4) or rotatable around it.

4. Apparatus according to one of the claims 1, 2, or 3, **characterized in that** a systematic arrangement of cooling fins is provided at the areas through which the cooling medium flows, and that a gaseous fluid is used the cooling medium.

5. Process for increasing the cooling capacity of an extrusion line for the extrusion of a plastic profile, particularly of a plastic pipe, comprising the steps
a) melting of plastic in an extruder (1),
b) shaping of a plastic strand and insertion of the plastic strand into a tool (2),
c) shaping of a plastic profile by means of the tool (2), and
d) calibration and hardening of the profile through cooling in a calibration device (3),
the temperature of the plastic strand within the tool (2) being reduced before the exit from the tool (2) by means of a fluid channeled through the tool (2) counter to the extrusion direction,
**characterized in that**
the fluid is channeled through guide channels (12) located evenly around the mandrel (4) of the tool (2), and through the tool (2),
the flow of the fluid being controlled within the tool (2) by means of a bypass (8), this being realized by opening or closing the fluid openings (9) within the bypass (8) to an extent of 0 to 100%,
**the bypass (8)** being designed such that an axial movement of an extract air duct (7) allows for the radial fluid openings (9) to be individually opened at the side closest to or opposite the extruder.

6. Process according to claim 5, **characterized in that** during extrusion, the bypass air supply is dosed within the range of 0 to 100% by means of one or several switching devices.

7. Process according to claim 5 or 6, **characterized in that** the temperature of the tool is regulated via the machine control unit by channeling the cooling medium to a greater or smaller extent through the bypass (8) or by heating areas through electric heating elements.

## Revendications

1. Ligne d'extrusion pour la production de profiles en plastique, de préférence de tubes en plastique, comprenant au moins
une extrudeuse (1),
un outil (2),
un outil de calibrage (3)
ainsi que d'autres installations subséquentes (4, 5),
**caractérisée en ce que**
l'outil (2) comprend des canaux de passage (12) repartis de manière régulière autour du mandrin (14) de l'outil (2)
**et que**
l'outil (2) présente un refroidissement intérieur dirigé dans le sens opposé à celui de la direction d'extrusion et dont la répartition des courants est adaptable,
au moins une gaine d'extraction d'air prévue comme détournement pour un fluide de refroidissement étant disposée à l'intérieur de l'outil (2) de façon à pouvoir être déplacée axialement, ladite gaine d'extraction d'air permettant la répartition des courants,
**des orifices à fluide (9) étant disposés à la gaine d'extraction d'air (7) axialement déplaçable** sur le côté proche de (11) ou le côté opposé (12) à l'extrudeuse, **les orifices à fluide constituant une dérivation (8) en relation avec la gaine d'extraction d'air (7).**

2. Appareil selon la revendication 1, **caractérisé en ce que** le détournement est prévu comme dispositif de commutation.

3. Appareil selon la revendication 2, **caractérisé en ce que** le détournement est conçu comme une gaine d'extraction (7) et que ladite gaine d'extraction d'air (7) peut être déplacée le long de ou tournée autour l'axe d'extrusion (4).

4. Appareil selon l'une quelconque des revendications 1, 2 ou 3, **caractérisé en ce qu'**une disposition ciblée d'ailettes de refroidissement est prévue aux espaces à travers desquels le fluide de refroidissement est destiné à s'écouler et qu'un fluide gazeux est utilisé comme fluide de refroidissement.

5. Procédé pour l'augmentation de puissance de refroidissement d'une ligne d'extrusion et pour l'extrusion d'un profile en matière plastique, en particulier d'un tube en plastiquecomprenant les étapes consistant à
a) fusion de plastique dans une extrudeuse (1),
b) façonnage d'un cordon en matière plastique et insertion dudit cordon en matière plastique dans un outil (2),
c) façonnage d'un profile en matière plastique au moyen dudit outil (2) et
d) calibrage et durcissement par refroidissement du profile dans un outil de calibrage (3),
la température du cordon en matière plastique dans l'outil (2) étant réduite avant la sortie de l'outil (2) au moyen d'un fluide dirigé à travers de l'outil dans le sens opposé à celui de la direction d'extrusion,
**caractérisé en ce que**
ledit fluide est dirigé à travers de canaux de passage repartis de manière régulière autour du mandrin (14) de l'outil (2) et à travers de l'outil,
l'écoulement de fluide dans l'outil étant contrôlé au moyen d'une dérivation (8) en ouvrant ou fermant les orifices à fluide (9) dans la dérivation (8) dans une mesure de 0 à 100%,
**la dérivation (8)** étant conçu de telle manière que les orifices à fluide radiaux (9) puissent être individuellement ouverts sur le côté proche de ou le côté opposé à l'extrudeuse par un déplacement axial d'une gaine d'extraction d'air (7).

6. Procédé selon la revendication 5, **caractérisée en ce que** pendant l'extrusion l'air de dérivation est dosé de façon continue dans une mesure de 0 à 100 % au moyen d'une ou de plusieurs dispositifs de commutation.

7. Procédé selon l'une quelconque des revendications 5 ou 6, **caractérisé en ce que** la température de l'outil est contrôlée par un système de commande qui permet de diriger le fluide de refroidissement en plus ou moins grande quantité à travers la dérivation (8) ou de chauffer des aréaux par des éléments de chauffage électriques.
